# EUROPÄISCHE PATENTSCHRIFT

(11) **EP 3 836 162 B1**
(45) Veröffentlichungstag und Bekanntmachung des Hinweises auf die Patenterteilung: **05.01.2022**
(21) Anmeldenummer: 20000434.9
(22) Anmeldetag: 03.12.2020
(51) Int. Cl.: G21C 5/02, G21C 19/20, G21C 5/12

(54) **MODERATORREPARATURELEMENT, MODERATORREPARATURELEMENTWERKZEUG UND WERKZEUGSYSTEM**
MODERATOR REPAIR ELEMENT, MODERATOR REPAIR ELEMENT TOOL AND TOOL SYSTEM
ÉLÉMENT DE RÉPARATION DU RALENTISSEUR, OUTIL D'ÉLÉMENT DE RÉPARATION DU RALENTISSEUR ET SYSTÈME D'OUTILS

(30) Priorität: 10.12.2019 DE 102019008559
(43) Veröffentlichungstag der Anmeldung: 16.06.2021
(73) Patentinhaber: Westinghouse Electric Germany GmbH, 68167 Mannheim (DE)
(72) Erfinder: Brasse, Markus, 68309 Mannheim (DE); Sassen, Felix, 68163 Mannheim (DE); Sassen, Janet, 68163 Mannheim (DE)
(74) Vertreter: Eickmeyer, Dietmar

(56) Entgegenhaltungen:
- DE-A1- 1 448 398
- DE-B- 1 141 034

## Beschreibung

Die Erfindung betrifft ein Moderatorreparaturelement für eine als Moderator dienende Graphitkörperanordnung in einem gasgekühlten Kernreaktor sowie ein Moderatorreparaturelementwerkzeug und ein Werkzeugsystem für ein Moderatorreparaturelement.

Es ist allgemein bekannt, dass es verschiedene Typen von nuklearen Kernanlagen gibt. Bei gasgekühlten Kernreaktoren von einem fortschrittlichen Typ, kurz AGR (Abkürzung für die englische Bezeichnung "Advanced Gas-cooled Reactor") werden beispielsweise Brennstäbe in zylinderförmige Bohrungen in Graphitblöcke eingebracht, so dass zwischen dem Graphit und den Brennstäben ein Ringspalt entsteht. Die Graphitblöcke sind dazu in geodätischer Richtung vertikal übereinander gestapelt. Durch den Ringspalt strömt dann ein Gas, häufig Kohlendioxid, als Kühlmittel von oben nach unten, um eine Kühlung der Brennstäbe zu gewährleisten. Das die Brennstäbe umgebende Graphit dient zudem als Moderator für die freien Neutronen bei der Kernspaltung. Eine Vielzahl von nebeneinander angeordneten Stapeln von Graphitblöcken bildet zusammen mit anderen Bauteilen einen Kern des gasgekühlten Kernreaktors.

Durch chemische und physikalische Einflüsse beim Betrieb eines solchen Kernreaktors wird das Material der Graphitblöcke, nämlich das Graphit beeinflusst. So kann es vorkommen, dass das Graphit stellenweise eine räumliche Expansion erfährt und derart Spannungen im betreffenden Graphitblock generiert. Diese räumliche Expansion geschieht an unvorhersehbaren Stellen. Die in den Graphit eingebrachten Spannungen können jedoch zu verschlechterten Materialeigenschaften und sogar zur Schädigung des Graphits, beispielsweise durch Rissbildung im Graphit oder durch Abplatzen von Graphitteilen vom Graphitblock, führen.

Nachteilig sind solche Schädigungen insbesondere dann, wenn Abplatzungen von Graphit unterschiedlicher Größe im Bereich des Ringspalts vorkommen, in diesen hineinfallen und sich in diesem sammeln. Das könnte einerseits zu einer Verschlechterung der Kühlung des Brennelements führen oder andererseits beim Herausziehen des Brennelements aus der Bohrung zu einem Verkeilen oder einer Blockierung des Brennelements im Graphitblock führen.

Solche Schädigungen, insbesondere Abplatzungen, treten aus materialtechnischen Gründen vor allem im Bereich von solchen Kanten an den Graphitblöcken auf, die zu den Bohrungen weisen. Da die Kanten mit vergleichsweise wenig Material des Graphitblocks ausgebildet sind, reichen schon geringere Schädigungen aus, um Abplatzungen hervorzurufen, im Vergleich zu Schädigungen an einer Seitenfläche des Graphitblocks.

Eine Reparatur solcher Schäden oder Schädigungen ist bisher nicht möglich und wird während des Betriebs eines gasgekühlten Kernreaktors so lange hingenommen, solange die Integrität der Graphitblöcke nicht gefährdet ist.

Das Dokument DE1141034 offenbart ein Gerät zum Entnehmen von Materialproben aus dem mit Kanälen versehenen Graphitkörper eines Kernreaktors. Das Dokument DE1448398 offenbart ein Bohrungsmeßgerät zur Messung der Änderungen der Innenwandkonturen und -krümmungen in der Längserstreckung und um den Umfang einer im wesentlichen zylindrischen Bohrung eines Brennstoff- oder Regulierstabkanals im Kern eines graphitmoderierten Kernreaktors. Weder D1 noch D2 lehren die Reparatur von Schäden an Graphitblöcken.

Ausgehend von diesem Stand der Technik ist es Aufgabe der Erfindung, ein Moderatorreparaturelement, ein Moderatorreparaturelementwerkzeug und ein Werkzeugsystem anzugeben, mit dem Schädigungen an einer der Bohrung zugewandten Seite der Graphitblöcke reparierbar sind.

Die Aufgabe wird gelöst durch ein Moderatorreparaturelement für einen Brennstab eines gasgekühlten Kernreaktors der eingangs genannten Art. Dieses ist dadurch gekennzeichnet, dass Schneidelemente und Distanzelemente auf einer gedachten Ebene um eine gedachte Mittelachse in einer ersten Anordnung innerhalb eines ersten gedachten Kreises angeordnet sind, dass die Schneidelemente an ihren radial nach außen weisenden Flächen Schneidmittel aufweisen, dass die Schneidelemente an ihren radial nach innen weisenden Flächen Antriebsverbindungsmittel zur Verbindung mit einem Antrieb aufweisen, dass die Schneidelemente an ihren in radialer Richtung orientierten Flächen erste Verbindungsmittel aufweisen, dass die Distanzelemente an ihren in radialer Richtung orientierten Flächen zweite Verbindungsmittel aufweisen, dass die Schneidelemente in radialer Richtung nach außen in eine vorgegebene Position bewegbar sind, dass die vorgegebene Position so bestimmt ist, dass die Distanzelemente zwischen zwei radial benachbarte Schneidelemente zwischenfügbar sind, dass die Distanzelemente in radialer und/oder axialer Richtung nach außen oder nach außen sowie axial in eine weitere Position bewegbar sind, dass die Distanzelemente in der weiteren Position zwischen zwei radial benachbarte Schneidelemente zwischengefügt sind, dass die Schneidelemente in der vorgegebenen Position und die zwischengefügten Distanzelemente zu einer zweiten Anordnung angeordnet sind, die innerhalb eines zweiten gedachten Kreises angeordnet sind, dass die ersten und zweiten Verbindungsmittel formschlüssig verbunden sind, wenn die Schneidelemente und Distanzelemente in der zweiten Anordnung angeordnet sind.

Die Grundidee der Erfindung besteht darin, dass ein Moderatorreparaturelement Schneidelemente und Distanzelemente aufweist. Diese sind zunächst so angeordnet, dass sie in einer ersten Anordnung angeordnet sind, wobei die Schneidelemente und Distanzelemente innerhalb eines ersten Kreises gelegen sind. Ein Durchmesser des ersten Kreises ist insbesondere kleiner als ein Durchmesser einer vertikalen Ausnehmung oder einer Bohrung in den Graphitblöcken. Auf diese Weise ist sichergestellt, dass das Moderatorreparaturelement auf besonders einfache Weise durch die Ausnehmung in den Graphitblöcken zu einer gewünschten Stelle verbringbar ist, beispielsweise eine Stelle mit einer Schädigung, an der ein Graphitblock oder zwei vertikal benachbarte Graphitblöcke repariert werden sollen. Die Reparatur der gewünschten Stelle erfolgt in mehreren Arbeitsschritten. Zunächst wird der Graphit an der gewünschten Stelle abgetragen, indem eine Nut in einer axialen Ebene, in der sich die gewünschte Stelle befindet, aus dem Graphit herausgeschnitten wird. Dazu weisen die Schneidelemente Schneidmittel auf, also beispielsweise Sägezähne, Fräselemente, Raspelelemente oder Schleifelemente. Zudem sind die Schneidelemente über ihre Antriebsverbindungsmittel in eine Rotationsbewegung versetzbar, so dass die Schneidmittel nach und nach Graphit abtragen und der Art die Nut ausbilden. Der sich derart stetig vergrößernde Querschnitt erfordert eine entsprechende Anpassung der radialen Position der Schneidelemente. Dazu sind diese in radialer Richtung bewegbar, beispielsweise durch einen entsprechenden Antrieb des Moderatorreparaturelements oder auch durch ein entsprechendes Werkzeug. Jedenfalls erfolgt die radiale Bewegung der Schneidelemente so lange, bis die Schneidelemente auf einer vorgegebenen zweiten Kreisbahn gelegen sind. Die äußeren Abmessungen des zweiten Kreises sind damit größer als die äußeren Abmessungen des ersten Kreises. Der Durchmesser des zweiten Kreises ist zu dem so gewählt, dass zwischen zwei radial benachbarten Schneidelementen ein Distanzelement zwischenfügbar ist. Die dann zwischengefügten Distanzelemente verbinden sich dann formschlüssig mit ihren benachbarten Schneidelementen, so dass die zweite Anordnung durch die formschlüssig miteinander verbundenen Schneid- und Distanzelemente ausgestaltet ist. Zur Zwischenfügung der Distanzelemente sind diese ebenfalls radial und gegebenenfalls axial bewegbar, beispielsweise durch einen entsprechenden Antrieb des Moderatorreparaturelements oder auch durch ein entsprechendes Werkzeug. Auf diese Weise ist die schadhafte Stelle am Graphit entfernt und durch das Moderatorreparaturelement ersetzt, die schadhafte Stelle also repariert worden. Die Reparatur kann dabei während des Betriebs oder bei Stillstand des Kernreaktors erfolgen.

Besonders vorteilhaft ist es, wenn eine Nuttiefe der Nut einer radialen Dicke der Schneidelemente beziehungsweise der Distanzelemente entspricht. Besonders vorteilhaft ist es sodann, wenn die Schneidelemente und die Distanzelemente die gleiche radiale Dicke aufweisen. Außerdem ist es vorteilhaft, wenn eine axiale Erstreckung der Distanzelemente beziehungsweise der Schneidelemente wenigstens auf eine Länge der zu reparierenden Schädigung im Graphit - in axialer Richtung einer Ausnehmung im Graphit gesehen - angepasst ist. Auf diese Weise wird die vollständige Schädigung des Graphits repariert. Ein Material und eine Konstruktion der Schneidelemente sowie der Distanzelemente ist so gewählt, dass die statischen und die dynamischen Anforderungen an das Graphit an der zu reparierenden Stelle auch durch die Schneidelemente sowie die Distanzelemente erfüllt sind.

Insbesondere ist es vorteilhaft, wenn eine axiale Erstreckung der Distanzelemente beziehungsweise der Schneidelemente größer ist als die Länge der zu reparierenden Schädigung im Graphit in axialer Richtung einer Ausnehmung im Graphit gesehen. Dann sinken die Anforderungen an die Genauigkeit der axialen Positionierung des Moderatorreparaturelements an die gewünschte Stelle zum Einbringen in den Graphit. Ein höherer Fehler bei der Positionierung des Moderatorreparaturelements ist damit akzeptabel, eine entsprechend höhere Toleranz für die axiale Positionierung ist ermöglicht und somit eine Verbringung des Moderatorreparaturelements an die zu reparierende Stelle vereinfacht. Zudem wird auf diese Weise in jedem Fall die Schädigung vollständig herausgeschnitten und das Moderatorreparaturelement in den Graphit eingebracht. Eine mechanische Stabilität des Moderatorreparaturelements ist auch dann gewährleistet, wenn es zu einer horizontalen Verschiebung der Graphitblöcke innerhalb der konstruktiv vorgegebenen Auslegungsgrenzen kommt. Ein Vorteil des Moderatorreparaturelements besteht auch darin, dass dieses die mechanische Funktion des abgetragenen Graphitmaterials ganz oder teilweise übernimmt.

Eine bevorzugte Ausgestaltung des Moderatorreparaturelements ist dadurch kennzeichnet, dass bei einem in radialer Richtung gelegenen Querschnitt durch ein Schneidelement eine Fläche des Schneidmittels eine gerade, eine gekrümmte, eine kreisbogenabschnittsförmige oder eine ellipsenabschnittsförmige Schnittlinie aufweist. Auf diese Weise ist es besonders einfach möglich, durch eine Form des Schneidmittels eine Formung eines Nutgrundes der Nut zu bestimmen, um beispielsweise die Reparatur auf eine festgestellte Schädigung am oder im Graphit anzupassen.

Eine bevorzugte Variante des Moderatorreparaturelements sieht vor, dass eine formschlüssige Verbindung zwischen dem ersten und zweiten Verbindungselement als eine Nut- und Federverbindung, eine Verbindung durch aufeinander angepasste gegen eine Horizontale geneigte Flächen, eine Verklinkung, eine Schnappverbindung, eine federbelastete Sperrelementverbindung oder eine Rastverbindung ausgestaltet ist. Auf diese Weise ist eine formschlüssige Verbindung besonders einfach realisiert.

Insbesondere kann beispielsweise bei einer Nut- und Federverbindung oder bei einer Verbindung durch aufeinander angepasste gegen eine Horizontale geneigte Flächen die Schwerkraft ausgenutzt werden, um den Formschluss herzustellen. Ein sonst notwendige Antrieb oder eine sonst notwendige Vorrichtung ist hierdurch vermieden.

Vorteilhaft ist es auch, wenn die formschlüssige Verbindung zwischen dem ersten und zweiten Verbindungselement ein solches Spiel aufweist, dass eine Kompensation einer Änderung von Abmessungen der Schneidelemente und der Distanzelemente durch eine Temperaturänderung von einer ersten vorgegebene Temperatur auf eine zweite vorgegebene Temperatur ermöglicht ist. Diese Ausgestaltung zielt vor allem darauf ab, dass in einem gasgekühlten Kernreaktor vergleichsweise stark unterschiedliche Temperaturen auftreten können, die entsprechende Ausdehnung- beziehungsweise Schrumpfungsvorgänge an den Materialien im Kernreaktor zur Folge haben.

In einer weiteren Ausgestaltung des Moderatorreparaturelements ist es vorgesehen, dass die Schneidelemente und/oder die Distanzelemente je eine oder mehrere Ausnehmungen aufweisen. Hierdurch ist erreicht, dass ein Neutronenfluss im Kernreaktor durch die Schneidelemente beziehungsweise die Distanzelemente in möglichst geringem Maß beeinflusst wird.

Um eine negative Beeinflussung des Neutronenflusses noch weiter zu verringern kann es zudem vorgesehen sein, dass zumindest in einer der Ausnehmungen zumindest teilweise ein Moderatormaterial angeordnet ist. Mit einer derartigen Maßnahme kann der Neutronenfluss sogar gezielt in einer vorbestimmten Weise beeinflusst werden.

In einer weiteren bevorzugten Ausgestaltung des Moderatorreparaturelements weisen die Schneidelemente und/ oder die Distanzelemente an ihren radial nach innen weisenden Seite wenigstens einen Kragen auf. Der wenigstens eine Kragen kann dabei an einem Schneidelement beziehungsweise einem Distanzelement angeformt sein oder mit Verbindungsmitteln an den Elementen angebracht und mit diesen fest verbunden sein. Ein Vorteil eines solchen Kragens ist es, dass durch das Einbringen einer Nut in das Graphit zwei neue Kanten im Graphit - eine vertikal obere und eine vertikal untere neue Kante - entstehen, die wiederum bevorzugten Stellen für neue Schädigungen durch die Neutronenstrahlung im Kernreaktor sind. Diese neuen Kanten sind nunmehr von einer Seite des Schneidelements beziehungsweise Distanzelements sowie den Kragen überdeckt. Ein Herabfallen von gelösten Teilen des Graphits im Bereich der neuen Kanten in den Ringspalt ist vorteilhafterweise nicht mehr möglich. Zudem wird eine mögliche Leckageströmung durch einen Spalt zwischen den vertikal übereinander angeordneten Graphitblöcken vermieden, in dem der Spalt abgedichtet wird, sofern das Moderatorreparaturelement genau im Bereich eines solchen Spaltes angeordnet ist.

Vorteilhaft ist es auch, wenn der wenigstens eine Kragen als ein dünnwandiges Vollmaterialbauelement, als ein Netzbauteil oder als ein Gitterbauteil ausgebildet ist. Der Kragen dient zudem als radialer Anschlag für die Radialbewegung der Schneidelemente beziehungsweise der Distanzelemente.

Die Aufgabe wird auch gelöst durch ein Moderatorreparaturelementwerkzeug mit einer Fläche, auf der ein Moderatorreparaturelement angeordnet ist, dass zudem dadurch gekennzeichnet ist, dass erste Antriebsmittel mit den Antriebsverbindungsmitteln der Schneidelemente verbunden sind, dass zweite Antriebsmittel mit den Distanzelementen verbunden sind, dass die ersten Antriebsmittel dazu eingerichtet sind die Schneidelemente in radialer Richtung nach außen und die Schneidmittel in eine Rotationsbewegung um die gedachte Mittelachse zu bewegen, dass die zweiten Antriebsmittel dazu eingerichtet sind die Distanzelemente bedarfsweise in radialer Richtung nach außen zu bewegen, und dass die ersten und zweiten Antriebsmittel durch eine Antriebsvorrichtung angetrieben sind. Auf diese Weise ist ein vergleichsweise einfach aufgebautes Werkzeug realisiert, mit dem das Moderatorreparaturelement in den Graphit einsetzbar ist. Mit dem Moderatorreparaturelementwerkzeug ist das Moderatorreparaturelement in Rotationsbewegung versetzbar, so dass die Schneidmittel die Herstellung der Nut vornehmen können. Zum anderen gewährleistet das Moderatorreparaturelementwerkzeug, dass radiale Bewegungen der Schneidelemente und der Distanzelemente vornehmbar sind. Die radialen und/oder die axialen Bewegungen der Bauelemente des Moderatorreparaturelements können dabei mithilfe der Schwerkraft, der Fliehkräfte, pneumatisch, hydraulisch oder mit elektrischen Antrieben bewegt werden.

Eine Ausgestaltungsvariante des Moderatorreparaturelementwerkzeugs sieht vor, dass die Antriebsvorrichtung mechanisch, zum Beispiel mit einer Welle, pneumatisch oder hydraulisch angetrieben ist.

Zudem wird die Aufgabe gelöst durch ein Werkzeugsystem für ein Moderatorreparaturelementwerkzeug das dadurch gekennzeichnet ist, dass durch eine Antriebseinrichtung Antriebsenergie bereitgestellt ist, dass mit Energieübertragungsmitteln der Antriebsvorrichtung Antriebsenergie zugeführt ist. Dabei kann das Werkzeugsystem auch dadurch gekennzeichnet sein, dass die Antriebseinrichtung ein elektrischer, pneumatischer oder hydraulischer Antrieb ist.

Eine weitere Variante des Werkzeugsystems sieht zudem vor, dass die Energieübertragungseinrichtung eine Vollwelle, eine Hohlwelle, Pneumatikleitungen oder Hydraulikleitungen sind. Alle diese Bauelemente können den Neutronenfluss im Reaktor negativ beeinflussen. Die Bauelemente sind daher bevorzugt so ausgestaltet, beispielsweise mit Moderatormaterial umgeben, dass der Neutronenfluss nur in möglichst geringem Maße beeinflusst wird beziehungsweise so dass die Beeinflussung eine möglichst geringe Störung des Neutronenflusses darstellt.

Zur Beeinflussung des Neutronenflusses sieht eine weitere Variante des Werkzeugsystems vor, dass die Hohlwelle mit einem Moderatormaterial gefüllt ist.

Eine besonders bevorzugte Variante des Werkzeugsystems ist dadurch gekennzeichnet, dass ein Abstand zwischen dem Moderatorreparaturelementwerkzeug und der Antriebseinrichtung mit einem Abstandselement einstellbar ist. Auf diese Weise ist es besonders einfach möglich, das Moderatorreparaturelement mit dem Moderatorreparaturelementwerkzeug an eine bestimmte vorgegebene Stelle in der Ausnehmung, beispielsweise einer Bohrung, in den Graphitblöcken zu verschieben. Die Verschiebung erfolgt in axialer Richtung der Ausnehmung beziehungsweise in geodätischer Richtung gesehen nach unten oder oben.

Die Verschiebung ist besonders einfach dann realisiert, wenn das Abstandselement eine Spindel, eine Hohlspindel, eine Lochstange, ein Schienensystem oder ein Gerüst ist. Auch das Abstandselement ist dafür geeignet, den Neutronenfluss zu beeinflussen. Um die Beeinflussung möglichst gering zu halten, kann beispielsweise die Hohlspindel mit einem Moderatormaterial gefüllt sein.

Eine weitere Variante des Werkzeugsystems sieht vor, dass die Welle oder Hohlwelle im oder am Abstandselement gelagert ist.

Zudem kann bei dem Werkzeugsystem eine Absaugvorrichtung vorgesehen sein, durch die lose Partikel aus dem Bereich des Moderatorreparaturelementwerkzeugs zu einer Stelle außerhalb der Graphitkörperanordnung gefördert sind. Ein ungewollter Eintrag von Graphit in den Ringspalt oder in den Kühlkreislauf des Kühlmediums ist damit vermieden.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein Beispiel eines ersten Moderatorreparaturelement,
- Fig. 2: ein Beispiel einer formschlüssigen Verbindung in einer ersten Position
- Fig. 3: die formschlüssige Verbindung in einer zweiten Position,
- Fig. 4: eine Draufsicht durch das erste Moderatorreparaturelement in einem Graphitblock sowie
- Fig. 5: einen Längsschnitt durch eine Graphitblockanordnung mit einem Moderatorreparaturelementwerkzeug.

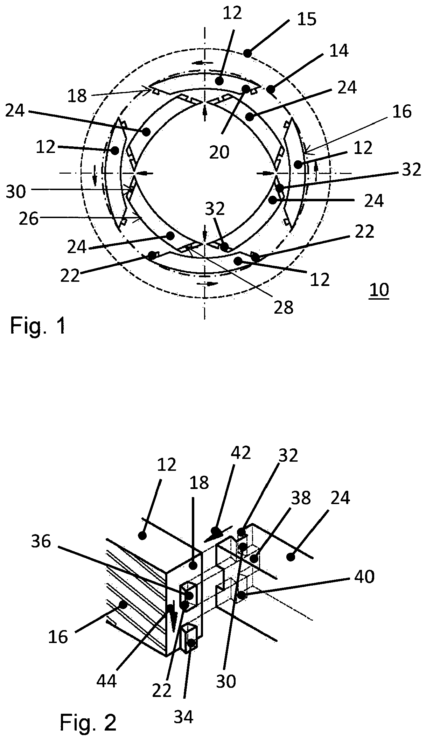

Fig. 1 zeigt ein Beispiel eines ersten Moderatorreparaturelements 10 in einer ersten Anordnung 11 in einer Draufsicht als schematische Darstellung. Es sind vier Schneidelemente 12 gezeigt, die entlang einer ersten Kreisbahn 14 gelegen sind. Jedes Schneidelement 12 weist dabei einen gleichen vorgegebenen Abstand zu seinem radial benachbarten Schneidelement 12 auf. Eine radial nach außen weisende erste Außenseite 16 jedes Schneidelements 12 weist Schneidmittel auf, in dem hier gewählten Beispiel sind das in versetzten Reihen angeordnete Sägezähne. Zudem ist jede erste Außenseite 16 in radialer Richtung betrachtet - also in dieser Draufsicht gut zu erkennen - mit einer kreisbogenabschnittsförmigen Krümmung versehen, wobei einem Kreisbogen mit dem Radius einer zweiten Kreisbahn 15 entspricht. Zudem hat jedes Schneidelement 12 eine erste radiale Seitenflächen 18 sowie eine zweite radialen Seitenflächen 20. Auf beiden radialen Seitenflächen 18, 20 ist eine erste Federanordnung 22 angeformt, die ein Bauteil einer formschlüssigen Verbindung ist, was später noch näher erläutert wird. Die radialen Seitenflächen 18, 20 sind zudem plan, jedoch nicht parallel zu einem Radius der ersten Kreisbahn 14 gelegen, jedoch parallel zu einem gedachten Mittelpunkt der ersten Kreisbahn 14.

Das erste Moderatorreparaturelement 10 weist zudem vier Distanzelemente 24 auf, die jeweils radial nach innen versetzt im Vergleich zu den Schneidelementen 12 angeordnet sind und einer nach außen weisenden zweiten Außenseite 26 auf einer auf einer gedachten Kreislinie angeordnet sind, die kleiner ist als eine radial nach innen weisende Seite der Distanzelemente 12. Eine radiale Position der Distanzelemente 24 ist zudem so gewählt, dass diese im vorgegebenen Abstand zwischen den Schneidelementen 12 angeordnet sind. Außerdem weisen die Distanzelemente 24 an einer dritten radialen Seitenflächen 28 sowie an einer vierten radialen Seitenflächen 30 jeweils eine Nutanordnung 32 auf, welche so ausgestaltet ist, dass sie zur Aufnahme der Federanordnung 18 geeignet ist.

Das technische Konzept des ersten Moderatorreparaturelements ist jedoch nicht auf die im Beispiel genannte Anzahl von Schneidelementen und Distanzelementen beschränkt. Die minimale Anzahl der notwendigen Schneidelemente ist eins, genauso wie die minimale Anzahl von Distanzelementen eins ist, wobei die Summe aus Schneidelementen und Distanzelementen wenigstens drei beträgt. Insofern ist eine Vielzahl von denkbaren Kombinationen aus Schneidelementen und Distanzelementen, die zu einem Moderatorreparaturelement angeordnet sind, innerhalb des Erfindungsgedankens.

Fig. 2 zeigt ein Beispiel einer formschlüssigen Verbindung mit der Federanordnung 22 an dem Schneidelement 12 sowie der Nutanordnung 32 an dem Distanzelement 24 in einer ersten Position als Detailvergrößerung der Bauelemente aus der Fig. 1. In der Darstellung des Schneidelements 12 sowie des Distanzelements 24 in dieser Figur sind zur Vereinfachung deren radial benachbarten Seitenflächen 18, 30 nicht winkelgetreu dargestellt. In der Figur soll nämlich nur beispielhaft dargestellt werden, wie die formschlüssige Verbindung zwischen Schneidelementen 12 und Distanzelementen 24 besonders einfach herstellbar ist.

Die Federanordnung 22 weist eine erste 34 und eine zweite Feder 36 auf, die voneinander mit einem ersten Abstand beabstandet sind. Eine Längserstreckung der Federn 34, 36 ist parallel gelegen zu einer gedachten Mittellinie der ersten Kreisbahn 14. Die Nutanordnung 32 weist eine erste Nut 38 sowie eine zweite Nut 40 auf, wobei eine Längserstreckung der ersten Nut 38 in einer Ebene senkrecht zu der gedachten Mittellinie gelegen ist und wobei eine Längserstreckung der zweiten Nut 40 parallel zur gedachten Mittellinie liegt. Mit einer derartigen Anordnung ist es leicht vorstellbar, dass mit lediglich zwei Bewegungsschritten eine formschlüssige Verbindung zwischen dem Schneidelement 12 und dem Distanzelement 24 herstellbar ist, und zwar wie folgt. Zunächst wird das Distanzelement 24 entlang einer radialen Richtung der ersten Kreisbahn 14 entsprechend einem ersten Pfeil 42 in radialer Richtung nach außen bewegt, so dass die zweite Feder 36 in die erste Nut 38 eingreift. Das Distanzelement 24 wird so lange radial nach außen bewegt, bis die zweite Außenseite 26 mit der ersten Außenseite 16 fluchtet. In dieser Position bewegt sich das Distanzelement 24 durch den Schwerkrafteinfluss in der Figur dargestellt nach unten gemäß dem zweiten Pfeil 44. Das ist dadurch ermöglicht, dass in dieser Position des Distanzelements 24 die erste Feder 34 in die zweite Nut 42 eingreift.

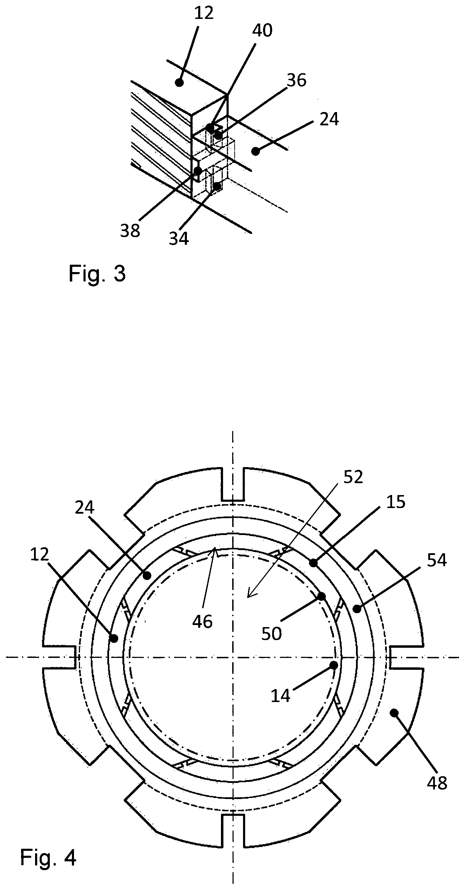

Eine zweite Position der formschlüssigen Verbindung, welche eine Endposition ist, in der die formschlüssige Verbindung, das Distanzelement 24 mit dem Schneidelement 24 fest verbindet, ist in Fig. 3 gezeigt. Im gezeigten Beispiel ist die formschlüssige Verbindung durch eine schwalbenschwanzförmige Nut- und Federverbindung realisiert. Für den Fachmann ist hier jedoch eine Vielzahl von möglichen formschlüssigen Verbindungsarten denkbar, die alle innerhalb des Erfindungsgedankens liegen. Besonders vorteilhaft ist es, wenn eine formschlüssige Verbindungsart gewählt wird, die allein durch eine radiale Bewegung unter Ausnutzung der Schwerkraft bewirkt ist. Dazu ist es vorteilhaft, wenn in Richtung der Mittellinie der ersten Kreisbahn 14 gesehen eine Dicke des Distanzelements 24 geringer ist als eine entsprechende Dicke des Schneidelements 12, wie es in der Fig. 3 gezeigt ist.

Die Fig. 4 zeigt eine Draufsicht auf das erste Moderatorreparaturelement 10, das in einer zweiten Anordnung 46 angeordnet ist, in einem ersten Graphitblock 48. die Schneidelemente 12 und die Distanzelemente 24 sind in der zweiten Anordnung 46 fest formschlüssig verbunden. Im gewählten Beispiel sind die Schneidelemente 12 und die Distanzelemente 24 zu einem ringförmigen Reparaturelement verbunden. Dabei liegen alle radial nach außen weisenden Seiten der Schneidelemente 12 und der Distanzelemente 24 auf der zweiten Kreisbahn 15, während alle radial nach innen weisenden Seiten der Elemente 12, 24 auf einer dritten Kreisbahn 50 gelegen sind, die einen Radius aufweist, der größer ist als der Radius der ersten Kreisbahn 14. Ein Durchmesser der dritten Kreisbahn 50 entspricht zudem genau dem Durchmesser einer kreiszylinderförmigen Bohrung 52 durch den ersten Graphitblock 48. in dieser Figur ist die Bohrung 52 als Kreisfläche zu sehen, da die Draufsicht genau senkrecht auf eine gedachte Mittellinie der Bohrung 52 erfolgt.

In radialer Richtung gesehen schließt sich dem Moderatorreparaturelement 10 ein Verbindungsring 54 an, dessen radial nach innen weisende Fläche die radial nach außen weisende Fläche des Moderatorreparaturelements 10 berührt.

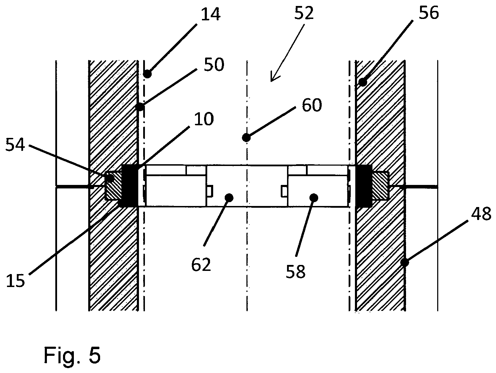

Die Fig. 5 zeigt einen Längsschnitt durch eine Graphitblockanordnung aufweisend den ersten Graphitblock 48 und einen zweiten Graphitblock 56 mit einem Moderatorreparaturelementwerkzeug 58 in schematischer Darstellung, welches gerade das erste Moderatorreparaturelement 10. in die zweite Anordnung 46 verbracht hat. In der Figur soll die Richtung unten auch die geodätische Richtung unten sein. In der Figur ist gut zu erkennen, dass der zweite Graphitblock 56 auf dem ersten Graphitblock 48 genau übereinander steht, so dass die Bohrung 52 auch über beide Graphitblöcke 48, 56 hinweg kreiszylinderförmig ausgebildet ist. Die Positionierung der beiden Graphitblöcke 48, 56 ist durch den Verbindungsring 54 sichergestellt, der in entsprechenden Ausnehmungen der Granitblöcke 48, 56 angeordnet ist.

Die erste Kreisbahn 14 deutet an, dass eine radiale äußere Begrenzung des Moderatorreparaturelements 10 in der ersten Anordnung 11 aufgrund einer Spielpassung zur dritten Kreisbahn, welche einen lichten Durchmesser der Bohrung 52 aufweist, in der Figur von oben mit dem Moderatorreparaturelementwerkzeug 58 entlang einer Mittelachse in die Bohrung 52 ein führbar ist. Das Moderatorreparaturelementwerkzeug 58 wird dabei von einem in der Figur nicht dargestellten Werkzeugsystem, dass im gewählten Beispiel eine Hohlwelle sein soll, die in eine Verbindungausnehmung 62 am Moderatorreparaturelement 10 eingreift und derart fest mit diesem verbunden ist. Mit der Hohlwelle ist das Moderatorreparaturelementwerkzeug an einer beliebigen axialen Stelle der Bohrung 52 positionierbar, insbesondere an einer gewünschten axialen Stelle, an der ein Moderatorreparatur durchgeführt werden soll. Eine solche Stelle ist häufig die axiale Stelle oder Bereich in der Bohrung 52, an der ein Graphitblock auf einem anderen Graphitblock aufsteht und so Kanten ausbildet, die besonders leicht Schädigungen durch Einwirkungen von freien Neutronen aufweisen können.

Die Hohlwelle dient zudem als Antriebsmittel für das Werkzeugsystem, mit dem das Moderatorreparaturelementwerkzeug 58 in eine Drehbewegung versetzbar ist. Durch die Drehbewegung des Moderatorreparaturelementwerkzeugs 58 wird auch das Moderatorreparaturelements 10 in eine Drehbewegung versetzt, wobei die Distanzelemente 24 und die Schneidelemente 12 von entsprechenden Antriebsmitteln des Moderatorreparaturelementwerkzeugs 58 radial nach außen bewegt werden, sodass die Schneidmittel der Schneidelemente 12 zunächst an den radial zur Bohrung 52 weisenden Flächen der Graphitblöcke 48, 56 anliegen und durch die Drehbewegung des Moderatorreparaturelementwerkzeugs 58 beginnen, eine Nut in die Graphitblöcke 48, 56 zu schneiden. Auf diese Weise wird nach und nach ein Durchmesser der ersten Anordnung 11 vergrößert, bis die zweite Anordnung 46 erreicht ist. Ein besonderer Vorteil des Einsetzens des Moderatorreparaturelements 10 an der axialen Stelle, an dem die Graphitblöcke 48, 56 vertikal übereinander stehen besteht darin, dass das Moderatorreparaturelement 10 formschlüssig in der Nut angeordnet ist. Zudem ist durch das in die Nut eingesetzte Moderatorreparaturelement 10 ein möglicher Leckagestrom von Kühlgas durch einen Spalt zwischen den Graphitblöcken 48, 65 vermieden. Zur Verbesserung der Abdichtung, also zur noch besseren Vermeidung von Leckageströmen können auf den radial nach innenweisenden Seiten des Moderatorreparaturelement Kragen oder Schürzen angeordnet, angeformt oder angebracht sein, die in axialer Richtung über die Abmessungen der Schneidelemente 12 oder/und der Distanzelemente 24 überstehen. Auf diese Weise ist eine Beeinflussung der thermischen Effizienz des Reaktorkerns vermieden. Solche Kragen oder Schürzen sind in der Figur jedoch nicht gezeigt.

Das bei der Bearbeitung der Graphitblöcke 48, 56 abgetragene Graphit wird durch eine in der Figur nicht dargestellte Absaugvorrichtung aufgefangen und durch entsprechende Zu- beziehungsweise Ableitungen, die bevorzugt in der Hohlwelle verlegt sind zu einer Stelle außerhalb der Bohrung 52 und auch außerhalb eines Reaktorkerns verbracht. Die Hohlwelle kann auch dazu verwendet werden, weitere Leitungen, beispielsweise für den Antrieb der Antriebsmittel im Moderatorreparaturelementwerkzeug 58 bereitzustellen. Anstatt der Hohlwelle können natürlich auch andere Bauteile Verwendung finden, beispielsweise eine Vollwelle, eine Spindel, eine Hohlspindel oder ähnliches. Hat das Moderatorreparaturelement 10 so, wie es in der Figur dargestellt ist, seine radial äußere Position in der zweiten Anordnung 46 erreicht, liegen die radial nach innenweisende Seiten der Schneidelemente12 sowie der Distanzelemente 24 genau auf einer Kreisbahn, die der dritten Kreisbahn 50 entspricht. Damit sind Störkanten für eine Strömung durch die Bohrung 52 vermieden.

### Bezugszeichenliste

- 10: Moderatorreparaturelement
- 11: erste Anordnung
- 12: Schneidelement
- 14: erste Kreisbahn
- 15: zweite Kreisbahn
- 16: erste Außenseite
- 18: erste radiale Seitenflächen
- 20: zweite radiale Seitenfläche
- 22: Federanordnung
- 24: Distanzelemente
- 26: zweite Außenseite
- 28: dritte radiale Seitenflächen
- 30: vierte radiale Seitenflächen
- 32: Nutanordnung
- 34: erste Feder
- 36: zweite Feder
- 38: erste Nut
- 40: zweite Nut
- 42: erster Pfeil
- 44: zweiter Pfeil
- 46: zweite Anordnung
- 48: ersten Graphitblock
- 50: dritte Kreisbahn
- 52: Bohrung
- 54: Verbindungsring
- 56: zweiter Graphitblock
- 58: Moderatorreparaturelementwerkzeug
- 60: Mittelachse
- 62: Verbindungausnehmung

## Patentansprüche

1. Moderatorreparaturelement (10) für eine als Moderator dienende Graphitkörperanordnung in einem gasgekühlten Kernreaktor, wobei Schneidelemente (12) und Distanzelemente (24) auf einer gedachten Ebene um eine gedachte Mittelachse in einer ersten Anordnung (11) innerhalb eines ersten gedachten Kreises angeordnet sind, dass die Schneidelemente (12) an ihren radial nach außen weisenden Flächen Schneidmittel aufweisen, wobei die Schneidelemente (12) an ihren radial nach innen weisenden Flächen Antriebsverbindungsmittel zur Verbindung mit einem Antrieb aufweisen, wobei die Schneidelemente (12) an ihren in radialer Richtung orientierten Flächen erste Verbindungsmittel aufweisen, wobei die Distanzelemente (24) an ihren in radialer Richtung orientierten Flächen zweite Verbindungsmittel aufweisen, wobei die Schneidelemente (12) in radialer Richtung nach außen in eine vorgegebene Position bewegbar sind, wobei die vorgegebene Position so bestimmt ist, dass die Distanzelemente(24) zwischen zwei radial benachbarte Schneidelemente (12) zwischenfügbar sind, wobei die Distanzelemente (24) in radialer und/oder axialer Richtung nach außen oder nach außen sowie axial in eine weitere Position bewegbar sind, wobei die Distanzelemente (24) in der weiteren Position zwischen zwei radial benachbarte Schneidelemente (12) zwischengefügt sind, wobei die Schneidelemente (12) in der vorgegebenen Position und die zwischengefügten Distanzelemente (24) zu einer zweiten Anordnung (46) angeordnet sind, die innerhalb eines zweiten gedachten Kreises angeordnet sind, und wobei die ersten und zweiten Verbindungsmittel formschlüssig verbunden sind, wenn die Schneidelemente (12) und Distanzelemente (24) in der zweiten Anordnung (46) angeordnet sind.

2. Moderatorreparaturelement (10) nach Anspruch 1, **dadurch gekennzeichnet, dass** bei einem in radialer Richtung gelegenen Querschnitt durch ein Schneidelement (12) eine Fläche des Schneidmittels eine gerade, eine gekrümmte, eine kreisbogenabschnittsförmige oder eine ellipsenabschnittsförmige Schnittlinie aufweist.

3. Moderatorreparaturelement (10) nach Anspruch 1 oder 2, **dadurch gekennzeichnet, dass** eine formschlüssige Verbindung zwischen dem ersten und zweiten Verbindungsmittel_als eine Nut- und Federverbindung, eine Verbindung durch aufeinander angepasste gegen eine Horizontale geneigte Flächen, eine Verklinkung, eine Schnappverbindung, eine federbelastete Sperrelementverbindung oder eine Rastverbindung ausgestaltet ist.

4. Moderatorreparaturelement (10) nach Anspruch 3, **dadurch gekennzeichnet, dass** die formschlüssige Verbindung zwischen dem ersten und zweiten Verbindungsmittel ein solches Spiel aufweist, dass eine Kompensation einer Änderung von Abmessungen der Schneidelemente (12) und der Distanzelemente (24) durch eine Temperaturänderung von einer ersten vorgegebene Temperatur auf eine zweite vorgegebene Temperatur ermöglicht ist.

5. Moderatorreparaturelement (10) nach einem der vorherigen Ansprüche, **dadurch gekennzeichnet, dass** eine Länge einer axialen Erstreckung in Richtung der gedachten Mittellinie der Schneidelemente (12) und der Distanzelemente (24) wenigstens einer axialen Ausdehnung eines zu reparierenden Bereiches der Graphitkörperanordnung entspricht.

6. Moderatorreparaturelement (10) nach einem der vorherigen Ansprüche, **dadurch gekennzeichnet, dass** die Schneidelemente (12) und/oder die Distanzelemente (24) je eine oder mehrere Ausnehmungen aufweisen.

7. Moderatorreparaturelement (10) nach Anspruch 6, **dadurch gekennzeichnet, dass** zumindest in einer der Ausnehmungen zumindest teilweise ein Moderatormaterial angeordnet ist.

8. Moderatorreparaturelement (10) nach einem der vorherigen Ansprüche, **dadurch gekennzeichnet, dass** die Schneidelemente (12) und/ oder die Distanzelemente (24) an ihren radial nach innen weisenden Seite wenigstens einen Kragen aufweisen.

9. Moderatorreparaturelement (10) nach Anspruch 8, **dadurch gekennzeichnet, dass** der wenigstens eine Kragen als ein dünnwandiges Vollmaterialbauelement, als ein Netzbauteil oder als ein Gitterbauteil ausgebildet ist

10. Moderatorreparaturelementwerkzeug (58) mit einer Fläche, auf der ein Moderatorreparaturelement (10) nach einem der vorherigen Ansprüche angeordnet ist, **dadurch gekennzeichnet, dass** erste Antriebsmittel mit den Antriebsverbindungsmitteln der Schneidelemente (12) verbunden sind, dass zweite Antriebsmittel mit den Distanzelementen (24) verbunden sind, dass die ersten Antriebsmittel dazu eingerichtet sind die Schneidelemente (12) in radialer Richtung nach außen und die Schneidmittel in eine Rotationsbewegung um die gedachte Mittelachse zu bewegen, dass die zweiten Antriebsmittel dazu eingerichtet sind die Distanzelemente (24) bedarfsweise in radialer Richtung nach außen zu bewegen, und dass die ersten und zweiten Antriebsmittel durch eine Antriebsvorrichtung angetrieben sind.

11. Moderatorreparaturelementwerkzeug nach Anspruch 10, **dadurch gekennzeichnet, dass** die Antriebsvorrichtung durch eine Welle, pneumatisch oder hydraulisch angetrieben ist.

12. Werkzeugsystem für ein Moderatorreparaturelementwerkzeug (58) nach Anspruch 10 oder 11, **dadurch gekennzeichnet, dass** durch eine Antriebseinrichtung Antriebsenergie bereitgestellt ist, dass mit Energieübertragungsmitteln der Antriebsvorrichtung Antriebsenergie zugeführt ist.

13. Werkzeugsystem nach Anspruch 12, **dadurch gekennzeichnet, dass** die Antriebseinrichtung ein elektrischer, pneumatischer oder hydraulischer Antrieb ist.

14. Werkzeugsystem nach Anspruch 12 oder 13, **dadurch gekennzeichnet, dass** die Energieübertragungseinrichtung eine Welle, eine Hohlwelle, Pneumatikleitungen oder Hydraulikleitungen sind.

15. Werkzeugsystem nach Anspruch 14, **dadurch gekennzeichnet, dass** die Hohlwelle mit einem Moderatormaterial gefüllt ist.

16. Werkzeugsystem nach einem der Ansprüche 12 bis 15, **dadurch gekennzeichnet, dass** ein Abstand zwischen dem Moderatorreparaturelementwerkzeug (58) und der Antriebseinrichtung mit einem Abstandselement einstellbar ist.

17. Werkzeugsystem nach Anspruch 16, **dadurch gekennzeichnet, dass** das Abstandselement eine Spindel, eine Hohlspindel, eine Lochstange, ein Schienensystem oder ein Gerüst ist.

18. Werkzeugsystem nach Anspruch 17, **dadurch gekennzeichnet, dass** die Hohlspindel mit einem Moderatormaterial gefüllt ist.

19. Werkzeugsystem nach Anspruch 18, **dadurch gekennzeichnet, dass** die Welle oder Hohlwelle im oder am Abstandselement gelagert ist.

20. Werkzeugsystem einem der Ansprüche 12 bis 19, **dadurch gekennzeichnet, dass** durch eine Absaugvorrichtung lose Partikel aus dem Bereich des Moderatorreparaturelementwerkzeugs (58) zu einer Stelle außerhalb der Graphitkörperanordnung gefördert sind.

## Claims

1. Moderator repair element (10) for a graphite body arrangement, serving as a moderator, in a gas-cooled nuclear reactor, wherein cutting elements (12) and spacer elements (24) are arranged on an imaginary plane about an imaginary central axis in a first arrangement (11) within a first imaginary circle, that the cutting elements (12) have cutting means on their faces that face radially outwards, wherein the cutting elements (12) have, on their faces that face radially inwards, drive connection means for connecting to a drive, wherein the cutting elements (12) have first connecting means on their faces that are oriented in a radial direction, wherein the spacer elements (24) have second connecting means on their faces that are oriented in a radial direction, wherein the cutting elements (12) are movable outwardly in a radial direction into a predefined position, wherein the predefined position is determined such that the spacer elements (24) are able to be interposed between two radially adjacent cutting elements (12), wherein the spacer elements (24) are movable outwardly in a radial and/or axial direction or outwardly and axially into a further position, wherein the spacer elements (24), in the further position, have been interposed between two radially adjacent cutting elements (12), wherein the cutting elements (12) in the predefined position and the interposed spacer elements (24) are arranged so as to form a second arrangement (46), which is arranged within a second imaginary circle, and wherein the first and second connecting means are connected in a form-fitting manner when the cutting elements (12) and spacer elements (24) are arranged in the second arrangement (46).

2. Moderator repair element (10) according to Claim 1, **characterized in that**, in a cross section, lying in a radial direction, through a cutting element (12), a face of the cutting means has a cutting line that is straight, curved, in the form of a circular arc segment or in the form of an ellipse segment.

3. Moderator repair element (10) according to Claim 1 or 2, **characterized in that** a form-fitting connection between the first and second connecting means is configured as a tongue-and-groove connection, a connection formed by mutually coordinated faces inclined with respect to a horizontal, an interlock, a snap-fitting connection, a spring-loaded blockingelement connection or a latching connection.

4. Moderator repair element (10) according to Claim 3, **characterized in that** the form-fitting connection between the first and second connecting means has such a clearance that compensation for a change in dimensions of the cutting elements (12) and of the spacer elements (24) caused by a change in temperature from a first predefined temperature to a second predefined temperature is allowed.

5. Moderator repair element (10) according to one of the preceding claims, **characterized in that** a length of an axial extent in the direction of the imaginary central line of the cutting elements (12) and of the spacer elements (24) corresponds at least to an axial extension of a region of the graphite body arrangement that is to be repaired.

6. Moderator repair element (10) according to one of the preceding claims, **characterized in that** the cutting elements (12) and/or the spacer elements (24) each have one or more recesses.

7. Moderator repair element (10) according to Claim 6, **characterized in that** a moderator material is arranged at least partially at least in one of the recesses.

8. Moderator repair element (10) according to one of the preceding claims, **characterized in that** the cutting elements (12) and/or the spacer elements (24) have at least one collar on their side facing radially inwards.

9. Moderator repair element (10) according to Claim 8, **characterized in that** the at least one collar is in the form of a thin-walled solid-material component, of a mesh component or of a lattice component.

10. Moderator repair element tool (58) having a face on which a moderator repair element (10) according to one of the preceding claims is arranged, **characterized in that** first drive means are connected to the drive connection means of the cutting elements (12), **in that** second drive means are connected to the spacer elements (24), **in that** the first drive means are designed to move the cutting elements (12) outwardly in a radial direction and to move the cutting means in a rotational movement about the imaginary central axis, **in that** the second drive means are designed to move the spacer elements (24) outwardly in a radial direction as required, and **in that** the first and second drive means are driven by a drive apparatus.

11. Moderator repair element tool according to Claim 10, **characterized in that** the drive apparatus is driven by a shaft, pneumatically or hydraulically.

12. Tool system for a moderator repair element tool (58) according to Claim 10 or 11, **characterized in that** drive energy is provided by a drive device, and **in that** drive energy is supplied to the drive apparatus by energy transmission means.

13. Tool system according to Claim 12, **characterized in that** the drive device is an electric, pneumatic or hydraulic drive.

14. Tool system according to Claim 12 or 13, **characterized in that** the energy transmission device is a shaft, a hollow shaft, pneumatic lines or hydraulic lines.

15. Tool system according to Claim 14, **characterized in that** the hollow shaft is filled with a moderator material.

16. Tool system according to one of Claims 12 to 15, **characterized in that** a spacing between the moderator repair element tool (58) and the drive device is settable by a spacing element.

17. Tool system according to Claim 16, **characterized in that** the spacing element is a spindle, a hollow spindle, a perforated rod, a rail system or a framework.

18. Tool system according to Claim 17, **characterized in that** the hollow spindle is filled with a moderator material.

19. Tool system according to Claim 18, **characterized in that** the shaft or hollow shaft is mounted in or on the spacing element.

20. Tool system one of Claims 12 to 19, **characterized in that** a suction apparatus conveys loose particles out of the region of the moderator repair element tool (58) to a location outside the graphite body arrangement.

## Revendications

1. Élément de réparation de ralentisseur (10) pour un ensemble de corps en graphite servant de ralentisseur dans un réacteur nucléaire refroidi par gaz, des éléments de coupe (12) et des éléments d'espacement (24) étant agencés sur un plan imaginaire autour d'un axe médian imaginaire dans un premier agencement (11) à l'intérieur d'un premier cercle imaginaire, les éléments de coupe (12) présentant des moyens de coupe au niveau de leurs surfaces orientées radialement vers l'extérieur, les éléments de coupe (12) présentant, au niveau de leurs surfaces orientées radialement vers l'intérieur, des moyens de liaison d'entraînement pour la liaison à un entraînement, les éléments de coupe (12) présentant, au niveau de leurs surfaces orientées dans la direction radiale, des premiers moyens de liaison, les éléments d'espacement (24) présentant, au niveau de leurs surfaces orientées dans la direction radiale, des deuxièmes moyens de liaison, les éléments de coupe (12) étant déplaçables dans la direction radiale vers l'extérieur dans une position prédéfinie, la position prédéfinie étant déterminée de telle sorte que les éléments d'espacement (24) peuvent être interposés entre deux éléments de coupe (12) radialement adjacents, les éléments d'espacement (24) étant déplaçables dans la direction radiale et/ou axiale vers l'extérieur ou vers l'extérieur ainsi qu'axialement dans une autre position, les éléments d'espacement (24) étant interposés entre deux éléments de coupe (12) radialement adjacents dans l'autre position, les éléments de coupe (12) dans la position prédéfinie et les éléments d'espacement (24) interposés étant agencés en un deuxième agencement (46) qui est agencé à l'intérieur d'un deuxième cercle imaginaire, et les premiers et deuxièmes moyens de liaison étant reliés par complémentarité de forme lorsque les éléments de coupe (12) et les éléments d'espacement (24) sont agencés dans le deuxième agencement (46).

2. Élément de réparation de ralentisseur (10) selon la revendication 1, **caractérisé en ce que** dans le cas d'une section transversale, située dans la direction radiale, à travers un élément de coupe (12), une surface du moyen de coupe présente une ligne de coupe rectiligne, incurvée, en forme de segment d'arc de cercle ou en forme de segment d'ellipse.

3. Élément de réparation de ralentisseur (10) selon la revendication 1 ou 2, **caractérisé en ce qu'**une liaison par complémentarité de forme entre le premier et le deuxième moyen de liaison est configurée comme une liaison à rainure et languette, une liaison au moyen de surfaces adaptées l'une à l'autre et inclinées par rapport à l'horizontale, un encliquetage, une liaison par clipsage, une liaison par éléments de blocage sollicitée par ressort ou une liaison à crans.

4. Élément de réparation de ralentisseur (10) selon la revendication 3, **caractérisé en ce que** la liaison par complémentarité de forme entre le premier et le deuxième moyen de liaison présente un jeu tel qu'une compensation d'une variation de dimensions des éléments de coupe (12) et des éléments d'espacement (24) par une variation de température d'une première température prédéfinie à une deuxième température prédéfinie est rendue possible.

5. Élément de réparation de ralentisseur (10) selon l'une des revendications précédentes, **caractérisé en ce qu'**une longueur d'une étendue axiale dans la direction de l'axe médian imaginaire des éléments de coupe (12) et des éléments d'espacement (24) correspond au moins à une expansion axiale d'une région à réparer de l'agencement de corps en graphite.

6. Élément de réparation de ralentisseur (10) selon l'une des revendications précédentes, **caractérisé en ce que** les éléments de coupe (12) et/ou les éléments d'espacement (24) comprennent respectivement un ou plusieurs évidements.

7. Élément de réparation de ralentisseur (10) selon la revendication 6, **caractérisé en ce qu'**au moins un matériau ralentisseur est agencé au moins partiellement dans l'un des évidements.

8. Élément de réparation de ralentisseur (10) selon l'une des revendications précédentes, **caractérisé en ce que** les éléments de coupe (12) et/ou les éléments d'espacement (24) présentent au moins un rebord au niveau de leur côté orienté radialement vers l'intérieur.

9. Élément de réparation de ralentisseur (10) selon la revendication 8, **caractérisé en ce que** l'au moins un rebord est réalisé sous la forme d'un élément structural en matériau plein à paroi mince, sous la forme d'une partie structurale de réseau ou sous la forme d'une partie structurale de grille.

10. Outil d'élément de réparation de ralentisseur (58) comportant une surface sur laquelle un élément de réparation de ralentisseur (10) selon l'une des revendications précédentes est agencé, **caractérisé en ce que** des premiers moyens d'entraînement sont reliés aux moyens de liaison d'entraînement des éléments de coupe (12), **en ce que** des deuxièmes moyens d'entraînement sont reliés aux éléments d'espacement (24), **en ce que** les premiers moyens d'entraînement sont conçus pour déplacer les éléments de coupe (12) dans la direction radiale vers l'extérieur et les moyens de coupe dans un déplacement de rotation autour de l'axe médian imaginaire, **en ce que** les deuxièmes moyens d'entraînement sont conçus pour déplacer les éléments d'espacement (24) au besoin dans la direction radiale vers l'extérieur, et **en ce que** les premiers et deuxièmes moyens d'entraînement sont entraînés au moyen d'un dispositif d'entraînement.

11. Outil d'élément de réparation de ralentisseur selon la revendication 10, **caractérisé en ce que** le dispositif d'entraînement est entraîné au moyen d'un arbre, de manière pneumatique ou de manière hydraulique.

12. Système d'outil pour un outil d'élément de réparation de ralentisseur (58) selon la revendication 10 ou 11, **caractérisé en ce que** de l'énergie d'entraînement est produite par un moyen d'entraînement, et **en ce que** de l'énergie d'entraînement est acheminée au dispositif d'entraînement à l'aide de moyens de transmission d'énergie.

13. Système d'outil selon la revendication 12, **caractérisé en ce que** le moyen d'entraînement est un entraînement électrique, pneumatique ou hydraulique.

14. Système d'outil selon la revendication 12 ou 13, **caractérisé en ce que** le dispositif de transmission d'énergie est un arbre, un arbre creux, des conduites pneumatiques ou des conduites hydrauliques.

15. Système d'outil selon la revendication 14, **caractérisé en ce que** l'arbre creux est rempli d'un matériau ralentisseur.

16. Système d'outil selon l'une des revendications 12 à 15, **caractérisé en ce qu'**une distance entre l'outil d'élément de réparation de ralentisseur (58) et le moyen d'entraînement peut être réglée à l'aide d'un élément d'espacement.

17. Système d'outil selon la revendication 16, **caractérisé en ce que** l'élément d'espacement est une broche, une broche creuse, une tige perforée, un système de rails ou un cadre.

18. Système d'outil selon la revendication 17, **caractérisé en ce que** la broche creuse est remplie d'un matériau ralentisseur.

19. Système d'outil selon la revendication 18, **caractérisé en ce que** l'arbre ou l'arbre creux est monté dans ou sur l'élément d'espacement.

20. Système d'outil selon l'une des revendications 12 à 19, **caractérisé en ce qu'**au moyen d'un dispositif d'aspiration, des particules libres sont transportées hors de la région de l'outil d'élément de réparation de ralentisseur (58) jusqu'à un emplacement à l'extérieur de l'agencement de corps en graphite.
